# EUROPÄISCHE PATENTSCHRIFT

(11) **EP 0 862 763 B1**
(45) Veröffentlichungstag und Bekanntmachung des Hinweises auf die Patenterteilung: **11.08.1999**
(21) Anmeldenummer: 96945718.3
(22) Anmeldetag: 11.11.1996
(51) Int. Cl.: G06F 11/26

(54) **SIMULATOREINHEIT ZUM SIMULIEREN EINER PERIPHERIEEINHEIT EINER MODULAR AUFGEBAUTEN SPEICHERPROGRAMMIERBAREN STEUERUNG**
SIMULATOR UNIT FOR SIMULATING A PERIPHERAL UNIT OF A MODULAR PROGRAMMABLE CONTROLLER
UNITE DE SIMULATION D'UNE UNITE PERIPHERIQUE D'UNE COMMANDE MODULAIRE A MEMOIRE PROGRAMMABLE

(30) Priorität: 23.11.1995 DE 19543826
(43) Veröffentlichungstag der Anmeldung: 09.09.1998
(73) Patentinhaber: SIEMENS AKTIENGESELLSCHAFT, 80333 München (DE)
(72) Erfinder: LANG, Georg, D-92237 Sulzbach-Rosenberg (DE)
(86) Internationale Anmeldenummer: DE9602145
(87) Internationale Veröffentlichungsnummer: WO9719392

(56) Entgegenhaltungen:
- EP-A- 0 539 313
- EP-A- 0 561 699
- DE-A- 3 823 925
- IBM TECHNICAL DISCLOSURE BULLETIN, Bd. 34, Nr. 8, 1.Januar 1992, Seiten 47-49, XP000302042 "SPD IOA BUS HARDWARE SIMULATOR FOR THE 6130/6030 I/O PROCESSOR"

## Beschreibung

Die vorliegende Erfindung betrifft eine Simulatoreinheit zum Simulieren mindestens einer Peripherieeinheit einer modular aufgebauten speicherprogrammierbaren Steuerung, die über einen Peripheriebus mit einer Zentraleinheit der speicherprogrammierbaren Steuerung verbindbar ist,
- mit einer Busschnittstelle zum Peripheriebus und
- mit einer Ein-/Ausgabeeinrichtung zum Eingeben von über den Peripheriebus zu sendenden Signalen und zum Ausgeben von über den Peripheriebus empfangenen Signalen.

Es sind bereits Simulatorbaugruppen für Peripheriebaugruppen modularer speicherprogrammierbarer Steuerungen bekannt, mittels derer man einzelne Baugruppen einer speicherprogrammierbaren Steuerung simulieren kann. Derartige Simulatoreinheiten sind beispielsweise in der DE-U-88 03 430 und der DE-U-92 16 114 beschrieben. Mit derartigen Baugruppen ist zu einem Zeitpunkt stets nur eine einzige und auch nur eine ganz bestimmte Baugruppe simulierbar. Wenn also z.B. eine speicherprogrammierbare Steuerung simuliert werden soll, welche aus einer Zentraleinheit und vier Peripheriebaugruppen besteht, benötigt man vier derartige Simulatorbaugruppen.

Aus der EP 0 539 313 A2 ist ein Verfahren und eine Vorrichtung zur Lastsimulation (Systementwicklung, Systemauslastung bei Datenverarbeitungsanlagen) bekannt.

Ferner ist bekannt, technische Anlagen einschließlich der sie kontrollierenden speicherprogrammierbaren Steuerungen auf einem Rechner zu simulieren. Hierdurch läßt sich aber nicht das tatsächliche Zusammenspiel der Zentraleinheit mit ihren Peripherieeinheiten simulieren. Darüber hinaus kann auf dem Rechner nicht das Echtzeitverhalten von Steuerung und/oder kontrollierter technischer Anlage simuliert werden.

Die Aufgabe der vorliegenden Erfindung besteht darin, eine Simulatoreinheit zur Verfügung zustellen, mittels derer es möglich ist, Peripheriebaugruppen speicherprogrammierbarer Steuerungen derart zu simulieren, daß das gesamte Anwenderprogramm in Echtzeit getestet werden kann.

Die Aufgabe wird dadurch gelöst, daß die Simulatoreinheit
- eine mit der Busschnittstelle sowie der Ein-/Ausgabeeinrichtung verbundene intelligente Einheit
   -- zum Auswerten der über die Busschnittstelle empfangenen Signale und hierzu korrespondierenden Ansteuern der Ein-/Ausgabeeinrichtung sowie
   -- zum Abfragen der Ein-/Ausgabeeinrichtung und hierzu korrespondierenden Ansteuern der Busschnittstelle
- und einen der intelligenten Einheit zugeordneten Speicher aufweist.

Dadurch ist es nämlich möglich, daß die intelligente Einheit empfangene Signale, also Signale, welche eigentlich an den Prozeß ausgegeben werden sollten, empfängt und entweder zwischenspeichert oder direkt an eine Ausgabeeinheit ausgibt, und zwar mit Geschwindigkeiten, welche der menschliche Beobachter nicht mehr unmittelbar wahrnehmen kann. Ebenso ist es möglich, simulierte Eingangssignale an die Zentraleinheit zu senden und diese Eingangssignale mit einer Geschwindigkeit zu ändern, welche der menschliche Bediener nicht erreichen kann. Dadurch wird es möglich, das in der Zentraleinheit der speicherprogrammierbaren Steuerung ablaufende Anwenderprogramm in Echtzeit auf der Zentraleinheit zu testen, obwohl weder die Peripheriebaugruppen real vorhanden sind noch die zu steuernde technische Anlage.

Weitere Vorteile und Einzelheiten ergeben sich aus der nachfolgenden Beschreibung eines Ausführungsbeispiels. Dabei zeigen:
- FIG 1: beispielhaft den Aufbau einer modularen speicherprogrammierbaren Steuerung,
- FIG 2 und 3: die speicherprogrammierbare Steuerung mit Simulatoreinheit,
- FIG 4: den internen Aufbau der Simulatoreinheit,
- FIG 5 bis 7: die Parametrierung der Simulatoreinheit und
- FIG 8: die Betriebsweise der Simulatoreinheit.

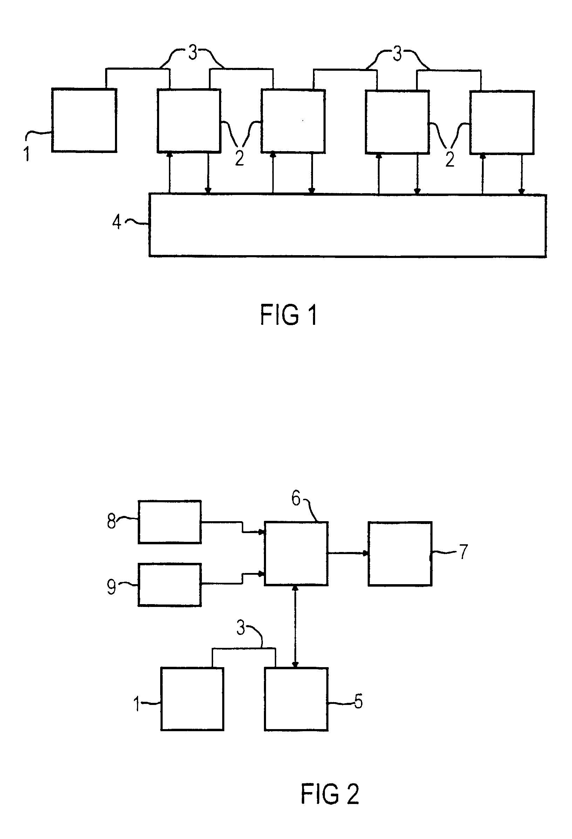

Gemäß Figur 1 besteht eine modulare speicherprogrammierbare Steuerung aus einer Zentraleinheit 1 und Peripheriebaugruppen 2, welche über einen (Peripherie-)Bus 3 miteinander verbunden sind. Die Peripheriebaugruppen 2 sind mit einem technischen Prozeß 4 verbunden, von dem sie Eingangssignale erhalten, die sie über den Bus 3 an die CPU weitergeben. Die CPU ermittelt unter Verarbeitung der Eingangssignale Ausgangssignale, welche dann über den Bus 3 und die Baugruppen 2 wieder an den technischen Prozeß 4 ausgegeben werden. Dieser Prozeß des Einlesen und Verarbeitens von Eingangssignalen und Ausgebens von Ausgangssignalen wird zyklisch wiederholt.

Die Zentraleinheit 1 verarbeitet die von den Peripheriebaugruppen 2 gelieferten Eingangssignale gemäß einem in der Zentraleinheit 1 abgespeicherten Anwenderprogramm. Beim Erstellen des Anwenderprogramms kann es geschehen, daß dieses Fehler enthält, welche schwerwiegende Sach- oder Personenschäden verursachen, wenn versucht würde, mittels des Anwenderprogramms den technischen Prozeß 4 zu kontrollieren. Das Anwenderprogramm wird daher in der Praxis getestet, bevor es tatsächlich zur Steuerung des technischen Prozesses 4 eingesetzt wird.

Gemäß der vorliegenden Erfindung wird hierzu entsprechend FIG 2 anstelle der Peripheriebaugruppen 2 die Simulatoreinheit 5 mit der Zentraleinheit 1 verbunden. Die Simulatoreinheit 5 ihrerseits ist wiederum mit einer Recheneinheit 6 verbunden. An die Recheneinheit 6, z.B. einen PC, sind ein handelsüblicher Monitor 7 sowie eine ebenfalls handelsübliche Tastatur 8 und eine handelsübliche Maus 9 angeschlossen. Hierdurch ist es möglich, mittels Tastatur 8 und Maus 9 Daten in den PC 6 einzugeben, von dem aus sie an die Simulatoreinheit 5 weitergeleitet werden. Ebenso ist es möglich, Daten von der Simulatoreinheit 5 über den PC 6 auf dem Monitor 7 auszugeben.

Anstelle über die Recheneinheit 6 könnten die Tastatur 8, die Maus 9 und der Monitor 7 bei entsprechender Ausgestaltung der Simulatoreinheit 5 selbstverständlich auch direkt mit der Simulatoreinheit 5 verbunden sein. In jedem Fall aber werden die von der Zentraleinheit 1 an die Simulatoreinheit 5 übermittelten Ausgangssignale nicht an den technischen Prozeß 4 ausgegeben, sondern auf dem Monitor 7 dargestellt. Ebenso werden Eingangssignale nicht vom technischen Prozeß 4 geliefert, sondern mittels der Maus 9 und der Tastatur 8 eingegeben.

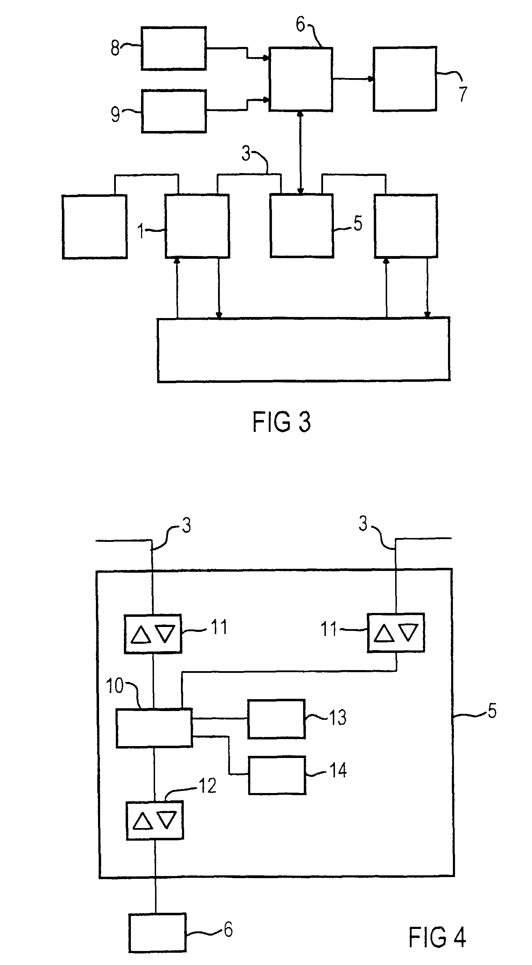

Im Beispiel gemäß Figur 2 simuliert die Simulatoreinheit 5 alle vier Peripheriebaugruppen 2. Im Ausführungsbeispiel gemäß Figur 3 hingegen simuliert die Simulatoreinheit 5 lediglich die beiden mittleren Baugruppen 2. Die erste und die letzte Peripheriebaugruppe sind real vorhanden. Es ist also möglich, Teile des technischen Prozesses 4 real zu steuern, während andere Teile des technischen Prozesses durch die Simulatoreinheit 5 nur simuliert werden. Diese Konstellation ist insbesondere im Falle von Änderungen oder Erweiterungen eines bestehenden Prozesses 4 von Vorteil.

Figur 4 zeigt nun den inneren Aufbau der Simulatoreinheit 5. Gemäß Figur 4 ist das zentrale Element der Simulatoreinheit 5 ein Mikroprozessor 10, der als intelligent Einheit dient. Mit dem Mikroprozessor 10 sind die Schnittstellen 11 zum Peripheriebus 3, eine Schnittstelle 12 zur Recheneinheit 6 sowie Speichereinheiten 13 und 14 verbunden. Die Schnittstellen 11 bilden zusammen die Busschnittstelle.

Gemäß dem gegebenen Ausführungsbeispiel ist der Peripheriebus 3 als serieller Bus ausgebildet. Die Schnittstelleneinheiten 11 sind dementsprechend als bidirektionale serielle Sendeempfänger ausgebildet.

Die Schnittstelle 12 zur Recheneinheit kann beispielsweise eine Standard-Schnittstelle sein, z.B. eine RS 232C. In diesem Fall ist auch die Schnittstelle 12 als bidirektionale serielle Schnittstelle ausgebildet.

Die Speichereinheit 13 ist ein gepufferter Schreib-Lesespeicher oder ein Schreib-Lesespeicher mit unterlagertem elektrisch lösch- und neu beschreibbaren Festwertspeicher. Im Speicher 13 ist das Programm gespeichert, das der Mikroprozessor 10 abarbeitet. Der Speicher 14 dient zum Zwischenspeichern von Eingabedaten, Ausgabedaten und Zwischenergebnissen.

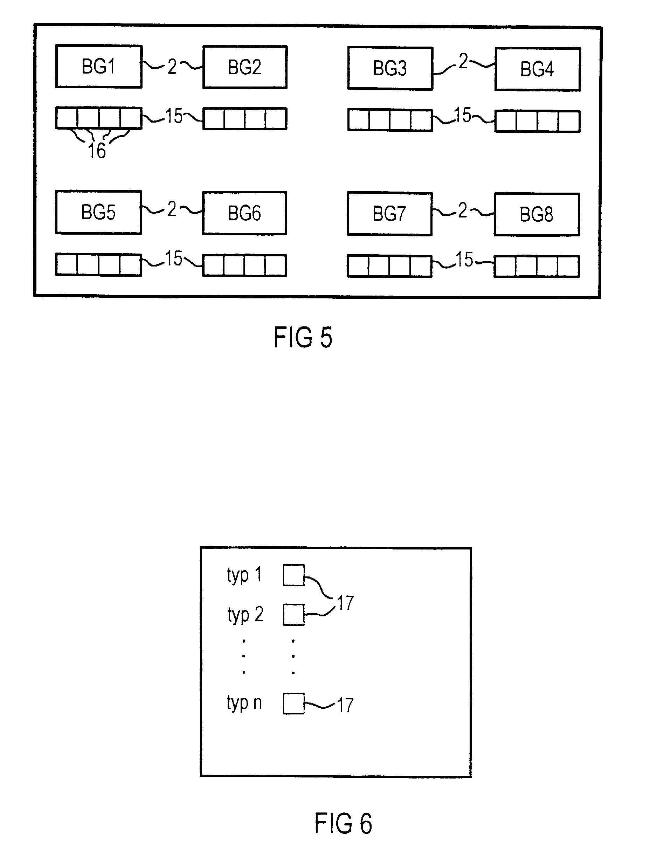

Die Parametrierung der Simulatoreinheit 5 wird nunmehr nachfolgend in Verbindung mit den Figuren 5 bis 7 beschrieben.

Zur Parametrierung der Simulatoreinheit 5 wird zunächst auf dem Monitor 7 der maximal zulässige Ausbaugrad der modularen speicherprogrammierbaren Steuerung dargestellt. Wenn die modulare speicherprogrammierbare Steuerung beispielsweise aus der Zentraleinheit 1 und bis zu 8 Peripheriebaugruppen 2 bestehen kann, werden auf dem Monitor 7 die acht Peripheriebaugruppenplätze dargestellt. Bezüglich jedes Peripheriebaugruppenplatzes ist ein Block 15 mit vier Kästchen 16 vorhanden. Zum Parametrieren der Simulatoreinheit 5 kreuzt der Anwender pro Block 15 eines der Kästchen 16 an. Das Ankreuzen kann in allgemein bekannter Weise mittels Eingaben über die Tastatur 8 und/oder Anklicken der Maus 9 erfolgen.

Von den vier Kästchen 16 hat je eines die Bedeutung,
- daß die Baugruppe 2 real vorhanden ist,
- daß die Baugruppe 2 überhaupt nicht vorhanden ist,
- daß die Baugruppe 2 von einer anderen Simulatoreinheit 5 simuliert wird und
- daß die Baugruppe 2 von der momentan parametrierten Simulatoreinheit 5 simuliert wird.

Beim Ankreuzen eines der Kästchen 16 - mit Ausnahme des Kästchens 16 "nicht vorhanden" - wird sofort ein neues Bild auf dem Monitor 7 dargestellt, welches in Figur 6 dargestellt ist. Gemäß Figur 6 wird eine Vielzahl von zu simulierenden Baugruppentypen dargestellt, z.B. die Typen "8 Bit-Digital-Eingabebaugruppe", "8 Bit-Digital-Ausgabebaugruppe", "8 Kanal-Analog-Eingabebaugruppe", "8 Kanal-Analog-Ausgabebaugruppe" usw. Mittels Tastatur 8 und/oder Maus 9 wird dann eines der Kästchen 17 angekreuzt. Hierdurch wird ausgewählt, welcher Baugruppentyp als Peripheriebaugruppe Nr.1, Peripheriebaugruppe Nr.2 ... Peripheriebaugruppe Nr.8 verwendet wird bzw. simuliert werden soll.

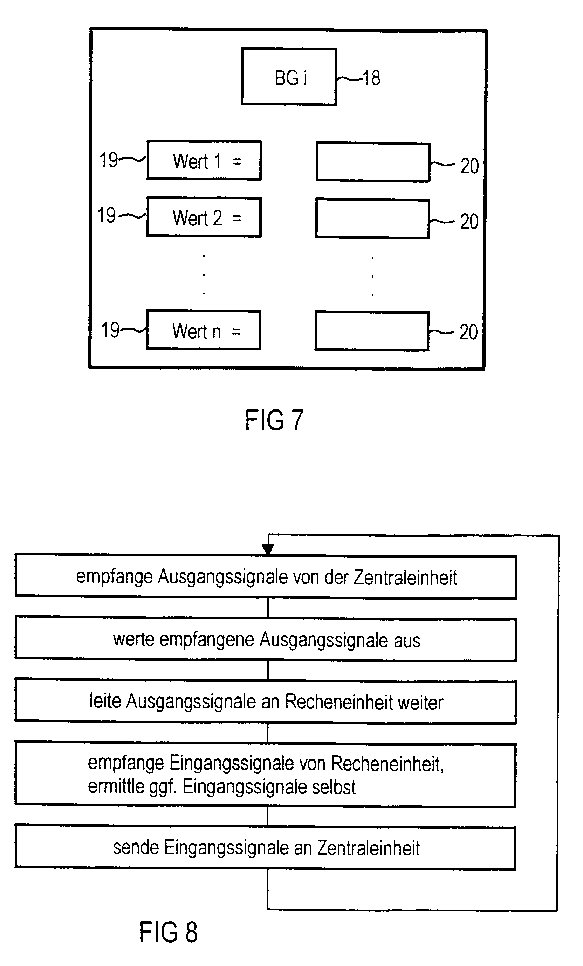

Wenn zuvor eingegeben wurde, daß die soeben näher spezifizierte Baugruppe 2 von der momentan parametrierten Simulatoreinheit 5 zu simulieren ist, wird unmittelbar nach der Auswahl des Baugruppentyps geprüft, ob die Baugruppe 2 Eingangssignale vom technischen Prozeß 4 erhalten würde, die sie an die Zentraleinheit 1 weiterleiten müßte, wenn sie real vorhanden wäre. In diesem Fall muß der Simulatoreinheit 5 vorgegeben werden, welche - scheinbaren - Eingangssignale sie simulieren soll. Zu diesem Zweck wird das in Figur 7 dargestellte Bild auf dem Monitor 7 dargestellt. Es wird also im Block 18 angezeigt, zu welcher Baugruppe Eingabewerte definiert werden sollen. Ferner wird in den Blöcken 19 angezeigt, welche Werte konkret simuliert werden sollen. In den Blöcken 20 kann dann eingegeben werden, welche Werte die zu simulierenden Werte annehmen sollen. Beispielsweise kann in die Blöcke 20 ein konkreter Zahlenwert eingetragen werden (z.B. 4,0 bei einem Analogwert oder logisch 1 bei einem Digitalwert). Es kann auch eine Funktionalität eingegeben werden, z.B. value 2 = 3,2 sin (5t), wobei t die Zeit in Sekunden bedeuten soll. Ferner ist auch ein Verweis auf ein Unterprogramm oder eine Datei eintragbar. In dem Unterprogramm ist gegebenenfalls eine Routine abgespeichert, welche den Wert jeweils ermittelt. In der Datei ist gegebenenfalls der Wert selbst abgespeichert, so daß er aus der Datei abgerufen werden kann.

Nach der Spezifikation des Baugruppentyps, gegebenenfalls auch der Vorgabe der zu simulierenden Werte wird zur Darstellung gemäß Figur 5 zurückgekehrt und die nächste Peripheriebaugruppe 2 abgefragt. Wenn alle Peripheriebaugruppen 2 abgefragt sind, werden die korrespondierenden Parametrierungen in den Festwertspeicher 13 der Simulatoreinheit 5 übertragen. Die Simulatoreinheit 5 ist nach der Parametrierung in der Lage, die gewünschten Peripheriebaugruppen 2 zu simulieren.

Im Betrieb arbeitet die Zentraleinheit 1 ganz normal ihr Anwenderprogramm ab, wie bereits in Verbindung mit FIG 1 erläutert. Anders ausgedrückt, die Zentraleinheit 1 merkt gar nicht, daß sie nicht tatsächlich mit real vorhandenen Peripheriebaugruppen 2 verbunden ist, sondern (zumindest auch) mit der Simulatoreinheit 5. Die Peripherieeinheiten 2 werden, wie bereits in Verbindung mit den FIG 2 und 3 erwähnt, zumindest teilweise durch die Simulatoreinheit 5 simuliert.

Im Betrieb arbeitet die Simulatoreinheit 5 das in Figur 8 dargestellte Programm iterativ ab. Gemäß Figur 8 empfängt die Simulatoreinheit 5 von der Zentraleinheit 1 der modularen speicherprogrammierbaren Steuerung Ausgabesignale für den technischen Prozeß 4. Sodann wertet sie diese Signale aus. Das Auswerten geschieht beispielsweise dadurch, daß als digitale Bitmuster übermittelte Werte in die korrespondierenden Analogsignale umgesetzt werden. Sodann werden die ausgewerteten Ausgabesignale an die Ausgabeeinheit 7, ggf. indirekt über die Recheneinheit 6, weitergeleitet. Sodann werden Eingabesignale von der Tastatur 8 und der Maus 9 eingelesen, ggf. wiederum indirekt über die Recheneinheit 6. Ferner werden gemäß dem im Festwertspeicher 13 abgespeicherten Anwenderprogramm Eingabesignale ermittelt. Beispielsweise können anhand der auszugebenden Signale neue Eingangssignale errechnet werden. Die eingegebenen und die errechneten Eingabesignale werden dann über den Bus 3 an die Zentraleinheit 1 weitergeleitet.

Diese Prozedur wird wiederholt, bis der Simulatoreinheit über Tastatur 8 und/oder Maus 9 ein Stop-Befehl eingegeben wird.

Abschließend sei noch erwähnt, daß mit der Simulatoreinheit 5 auch Baugruppentypen simuliert werden können, die sich noch in der Entwicklung befinden. Es ist daher möglich, mit Hilfe der erfindungsgemäßen Simulatoreinheit 5 auf der Zentraleinheit 1 ein Anwenderprogramm ablaufen zu lassen, das noch nicht existierende Baugruppentypen benutzt. Die Zeit von der realen Erstellung eines Peripheriebaugruppentyps bis zur Erstellung der zugehörigen Anwendersoftware für die Zentraleinheit 1 kann daher erheblich verkürzt werden.

## Patentansprüche

1. Simulatoreinheit (5) um Simulieren mindestens einer Peripherieeinheit (2) einer modular aufgebauten speicherprogrammierbaren Steuerung, die über einen Peripheriebus (3) mit einer Zentraleinheit (1) der speicherprogrammierbaren Steuerung verbindbar ist,
- mit einer Busschnittstelle (11) zum Peripheriebus (3) und
- mit einer Ein-/Ausgabeeinrichtung (12) zum Eingeben von über den Peripheriebus (3) zu sendenden Signalen und zum Ausgeben von über den Peripheriebus (3) empfangenen Signalen,
**dadurch gekennzeichnet,** daß sie
- eine mit der Busschnittstelle (11) sowie der Ein-/Ausgabeeinrichtung (12) verbundene intelligente Einheit (10)
-- zum Auswerten der über die Busschnittstelle (11) empfangenen Signale und hierzu korrespondierenden Ansteuern der Ein-/Ausgabeeinrichtung (12) und
-- zum Abfragen der Ein-/Ausgabeeinrichtung (12) und hierzu korrespondierenden Ansteuern der Busschnittstelle (11)
- und einen der intelligenten Einheit (10) zugeordneten Speicher (13,14) aufweist.

2. Simulatoreinheit nach Anspruch 1, **dadurch gekennzeichnet ,** daß durch sie mehr als eine Peripherieeinheit (2) simulierbar ist.

3. Simulatoreinheit nach Anspruch 1 oder 2, **dadurch gekennzeichnet,** daß die Ein-/Ausgabeeinrichtung (12) als bidirektionale Kommunikationsschnittstelle zum Anschließen an eine Recheneinheit (6), insbesondere an einen PC (6), ausgebildet ist.

4. Betriebsverfahren für eine Simulatoreinheit (5) nach einem der obigen Ansprüche, **dadurch gekennzeichnet,** daß sie zyklisch die über die Busschnittstelle (11) empfangenen Signale auswertet und daraus neue Werte zum Ansteuern der Busschnittstelle (11) ermittelt und diese Werte über die Busschnittstelle (11) sendet.

## Claims

1. Simulator unit (5) for the simulation of at least one peripheral unit (2) of a modularly constructed programmable logic controller, which can be connected via a peripheral bus (3) to a central unit (1) of the programmable logic controller,
- having a bus interface (11) to the peripheral bus (3) and
- having an input/output device (12) for the input of signals to be sent over the peripheral bus (3) and for the output of signals received over the peripheral bus (3),
characterized in that it contains
- an intelligent unit (10) which is connected to the bus interface (11) and to the input/output device (12)
-- for the evaluation of signals received over the bus interface (11) and driving the input/output device (12) in a manner corresponding hereto and
-- for the interrogation of the input/output device (12) and driving of the bus interface (11) in a manner corresponding hereto
- and a memory (13,14) assigned to the intelligent unit (10).

2. Simulator unit according to Claim 1, characterized in that more than one peripheral unit (2) may be simulated by means of said simulator unit.

3. Simulator unit according to Claim 1 or 2, characterized in that the input/output device (12) is designed as a bidirectional communications interface for connection to a computing unit (6), in particular to a PC (6).

4. Operating method for a simulator unit (5) according to one of the above claims, characterized in that it cyclically evaluates the signals received over the bus interface (11) and determines from them new values for driving the bus interface (11) and sends these values over the bus interface (11).

## Revendications

1. Unité de simulation (5), qui est destinée à simuler au moins une unité périphérique (2) d'une commande à mémoire programmable et à structure modulaire et qui peut être reliée par l'intermédiaire d'un bus périphérique (3) à une unité centrale (1) de la commande à mémoire programmable,
- ayant une interface de bus (11) vers le bus périphérique (3) et
- ayant un dispositif d'entrée/sortie (12) pour l'entrée de signaux à émettre par l'intermédiaire du bus périphérique (3) et pour la sortie de signaux reçus par l'intermédiaire du bus périphérique (3),
caractérisée par le fait qu'elle comporte
- une unité intelligente (10) reliée à l'interface de bus (11) ainsi qu'au dispositif d'entrée/sortie (12)
-- pour l'interprétation des signaux reçus par l'intermédiaire de l'interface de bus (11) et pour la commande correspondante du dispositif d'entrée/sortie (12) ainsi que
-- pour l'interrogation du dispositif d'entrée/sortie (12) et pour la commande correspondante de l'interface de bus (11)
- et une mémoire (13, 14) associée à l'unité intelligente (10).

2. Unité de simulation selon la revendication 1, caractérisée par le fait qu'elle peut simuler plus d'une unité périphérique (2).

3. Unité de simulation selon la revendication 1 ou 2, caractérisée par le fait que le dispositif d'entrée/sortie (12) est conçu comme une interface de communication bidirectionnelle pour le raccordement à un ordinateur (6), notamment à un PC (6).

4. Procédé d'exploitation d'une unité de simulation (5) selon l'une des revendications précédentes, caractérisé par le fait que l'unité de simulation interprète de façon cyclique les signaux reçus par l'intermédiaire de l'interface de bus (11), qu'elle en détermine de nouvelles valeurs pour commander l'interface de bus (11) et qu'elle envoie ces valeurs par l'intermédiaire de l'interface de bus (11).
